# EUROPÄISCHE PATENTSCHRIFT

(11) **EP 2 125 428 B1**
(45) Veröffentlichungstag und Bekanntmachung des Hinweises auf die Patenterteilung: **15.09.2010**
(21) Anmeldenummer: 08707658.4
(22) Anmeldetag: 11.02.2008
(51) Int. Cl.: B60P 3/00, E04H 1/12

(54) **MOBILES CONTAINERMODUL FÜR MILITÄRISCHE UND/ODER HUMANITÄRE FELDEINSÄTZE**
MOBILE CONTAINER MODULE FOR MILITARY AND/OR HUMANITARIAN FIELD APPLICATIONS
MODULE CONTENEUR MOBILE POUR SERVICE EN CAMPAGNE MILITAIRE ET/OU HUMANITAIRE

(30) Priorität: 21.02.2007 DE 102007009393
(43) Veröffentlichungstag der Anmeldung: 02.12.2009
(73) Patentinhaber: Kärcher Futuretech GmbH, 71364 Winnenden (DE)
(72) Erfinder: TOEPFER, Hans-Joachim, 71522 Backnang (DE); KOSTRON, Markus, 71686 Remseck (DE)
(74) Vertreter: Witte, Weller & Partner
(86) Internationale Anmeldenummer: PCT/EP2008/001027
(87) Internationale Veröffentlichungsnummer: WO 2008/101610

(56) Entgegenhaltungen:
- EP-A- 0 241 012
- EP-A- 1 522 454
- DE-A1- 3 432 282
- DE-A1- 19 821 042
- DE-U1- 20 118 752
- GB-A- 2 434 163

## Beschreibung

Die vorliegende Erfindung betrifft ein mobiles Containermodul für militärische und/oder humanitäre Feldeinsätze, insbesondere für die Dekontamination von Personen oder persönlichen Ausrüstungsgegenständen unter Feldbedingungen, mit einem Boden, einer Dachabdeckung und Seitenwänden, die im Transportzustand ein weitgehend geschlossenes, vorzugsweise quaderförmiges Containergehäuse bilden, mit einer Anzahl von technischen Geräten, die einen Funktionsumfang des Containermoduls bestimmen, wobei ein überwiegender Anteil der technischen Geräte in einem räumlich zusammenhängenden Teilbereich des Containergehäuses fest installiert ist, und mit einer lasttragfähigen Transportplatte, auf der das Containergehäuse dauerhaft befestigt ist.

Die Erfindung betrifft ferner ein mobiles Containersystem für solche militärischen und/oder humanitären Feldeinsätze mit einem ersten und einem zweiten solchen Containermodul.

Ein Containermodul und ein Containersystem dieser Art sind beispielsweise aus DE 201 18 752 U1 bekannt.

DE 103 45 351 A1 offenbart ein mobiles Dekontaminationssystem zum Dekontaminieren von Personen und Gegenständen. Es beinhaltet zumindest zwei, vorzugsweise drei Container, die jeweils ein Dekontaminationsmodul bilden. In einem ersten Container sind beispielsweise Anlagen und Geräte untergebracht, um eine Personendekontamination zu ermöglichen. In einem zweiten Container sind Anlagen und Geräte untergebracht, die eine Dekontamination von Bekleidung und persönlichen Ausrüstungsgegenständen ermöglichen. Ein besonderer Aspekt dieses containerbasierten Dekontaminationssystems besteht darin, dass die einzelnen Dekontaminationsmodule in den entsprechenden Containern jeweils so ausgerüstet sind, dass sie autark arbeitsfähig sind, so dass eine Personendekontamination beispielsweise an einem anderen Ort durchgeführt werden kann als die Dekontamination der Bekleidung und persönlichen Ausrüstungsgegenstände oder die Dekontamination von Großgerät. Eine weitere Besonderheit des bekannten Dekontaminationssystems besteht darin, dass die einzelnen Container lösbar zu einem Gesarritcontainer koppelbar sind.

Das bekannte Dekontaminationssystem wurde mit dem Ziel entwickelt, einen möglichst umfassenden Einsatz bei der Dekontamination von Personen und Gegenständen in militärischen und/oder humanitären Anwendungsfällen zu ermöglichen. Darüber hinaus sollte ein variabler Einsatz und ein einfacher und schneller Transport möglich sein, wobei in letztere Hinsicht Einschränkungen zugunsten eines möglichst vollständigen Einsatzspektrums in Kauf genommen wurden. Aus diesem Grund ist das bekannte Dekontaminationssystem zwar prinzipiell gut verlastbar und transportierbar, es eignet sich jedoch nicht oder nur nur bedingt für schnelle und hochmobile Einsatzkräfte, die in der Regel mit Hubschraubern an ihren Einsatzort gebracht werden.

Aus DE 34 32 282 A1 ist ein mobiles Dekontaminationssystem bekannt, das im Transportzustand zwei Großcontainer beinhaltet, von denen einer auf einem Transportfahrzeug und der zweite auf einem Anhänger transportiert werden. Das Transportfahrzeug besitzt außerdem einen integrierten Falttank, um nach dem Absetzen des ersten Großcontainers einen Wassertransport zu ermöglichen. Insgesamt ist auch dieses bekannte Dekontaminationssystem für umfangreiche Dekontaminationsaufgaben ausgelegt. Seine Luftverlastbarkeit und seine Eignung für schnelle, hochmobile Einsatzkräfte sind begrenzt.

Aus DE. 198 21 042 A1 ist ein Dekontaminationssystem zur Dekontamination von Personen und Gegenständen bekannt, bei dem ein erstes Modul die wesentlichen technischen Geräte zur Frischwasserversorgung, Abwasserentsorgung, Kraftstoffversorgung und Stromversorgung enthält. An dieses erste Modul können weitere Containermodule über Versorgungs- und Entsorgungsleitungen angeschlossen werden, wobei die weiteren Containermodule separate Anlagen zur Personen- und Gerätedekontamination aufweisen. Auch hier handelt es sich um ein System, das für umfangreiche Dekontaminationsaufgaben ausgelegt ist. Seine Eignung für schnelle, hochmobile Einsatzkräfte ist ebenfalls begrenzt.

Aus der eingangs genannten DE 201 18 752 U1 ist eine Duschanlage zur Entfernung atomarer, biologischer und chemischer Stoffe bekannt, bei der ein raumbildender Aufbau fest mit einem Grundrahmen verbunden ist. Der Grundrahmen ist eine Transportplatte, wie sie von Absetzkipper- oder Abrollcontainerfahrzeugen oder ähnlichen Spezialfahrzeugen bekannt ist.

Die Firma Krauss-Maffei Wegmann GmbH & Co. KG, 80997 München, Deutschland, bietet unter der Bezeichnung MUNGO ein Transportfahrzeug für hochmobile Einsätze an. Dieses Fahrzeug kann in Hubschraubern des Typs CH53 transportiert werden kann und ist daher schnell und flexibel transportierbar. In einer so genannten Variante 2 besitzt das Transportfahrzeug MUNGO ein integriertes Hubsystem, um Lasten selbständig heben zu können. Diese Lasten können entweder Container sein, in denen mobile Kommandostände untergebracht sind, oder Material und Ausrüstungsgegenstände, die auf einer speziellen Transportplattform angeordnet und mit Hilfe von Gepäcknetzen, Spanngurten oder dergleichen verzurrt sind. Das Transportfahrzeug MUNGO mit dem integrierten Hubsystem und der Transportplattform ist in einem Prospekt der Firma Krauss-Maffei Wegmann aus dem Jahr 2006 näher beschrieben.

Die bislang bekannten containerbasierten Dekontaminationssysteme sind zu groß und zu schwer für einen Transport mit dem MUNGO oder vergleichbaren Transportfahrzeugen. Sie eignen sich auch nicht für einen Lufttransport mit Hubschraubern des Typs CH53.

Angesichts dessen ist es eine Aufgabe der vorliegenden Erfindung, ein Containermodul mit integrierten technischen Geräten, insbesondere für die Dekontamination von Personen oder persönlichen Ausrüstungsgegenständen, anzugeben, das leicht und kompakt genug ist, so dass es sich für einen Lufttransport in Hubschraubern nach Art des CH53 sowie für einem Landtransport auf Transportfahrzeugen nach Art des MUNGO eignet. Außerdem soll das neue Containermodul einen flexiblen und weitgehend autarken Einsatz unter Feldbedingungen sowie eine schnelle Entfaltung und schnelle Inbetriebnahme der technischen Geräte am Einsatzort ermöglichen.

Diese Aufgabe wird nach einem Aspekt der vorliegenden Erfindung durch ein mobiles Containermodul der eingangs genannten Art gelöst; wobei das Containergehäuse auf der Transportplatte in zumindest einer Längsrichtung verschieblich montiert ist.

Gemäß einem weiteren Aspekt der Erfindung wird ein mobiles Containersystem für militärische und/oder humanitäre Feldeinsätze mit einem ersten und einem zweiten solchen Containermodul vorgeschlagen. Vorzugsweise beinhaltet das erste Containermodul technische Geräte und Ausrüstungsgegenstände, die eine Personendekontamination ermöglichen, während das zweite Containermodul technische Geräte und Ausrüstungsgegenstände beinhaltet, die eine Dekontamination von persönlichen Ausrüstungsgegenständen (ohne Bekleidung) ermöglichen. Prinzipiell können die technischen Geräte und Ausrüstungsgegenstände jedoch auch für einen anderen Funktionsumfang ausgebildet sein, insbesondere zur Trinkwasseraufbereitung, Abwasserbehandlung, Dekontamination von temperaturempfindlichen Sondergerät, zur Zubereitung von Speisen (Küchenmodule) und/oder zur Bereitstellung von Sanitärausstattungen.

Bei dem neuen Containermodul ist das in sich geschlossene Containergehäuse (trotz eigenem Boden) dauerhaft auf einer separaten Transportplatte befestigt. Dauerhaft bedeutet, dass die Befestigung so ausgebildet ist, dass das Containergehäuse auch beim Feldeinsatz des Containermoduls nicht von der Transportplatte abgenommen werden muss. Vorzugsweise ist das Containergehäuse zwar dauerhaft, jedoch trotzdem lösbar an der Transportplatte befestigt, beispielsweise fest verschraubt. Die Verwendung einer in sich tragfähigen Transportplatte ermöglicht es, die Gehäusewände des Containergehäuses dünner und leichter auszubilden als bei bekannten Containerkonzepten, weil die Gehäusewände im Gegensatz zu bekannten Containerkonzepten keine schweren Traglasten aufnehmen müssen. Im Gegensatz zur vorliegenden Erfindung sind die Gehäusewände bei den Containermodulen aus DE 103 45 351 A1 beispielsweise dazu ausgebildet, die gesamte Traglast des Containermoduls aufzunehmen, so dass das Containermodul mit einem Kran oder einem anderen Hubwerkzeug am Containergehäuse selbst hochgehoben werden kann. Die Reduzierung des Gesamtgewichts der Gehäusewände ermöglicht eine höhere Nutzlast und dementsprechend eine größere Leistungsfähigkeit der technischen Geräte.

Prinzipiell könnte man zur weiteren Gewichtsreduzierung in Betracht ziehen, auch den Boden des Containergehäuses wegzulassen, so dass die technischen Geräte und weiteren Ausrüstungsgegenstände direkt auf der Transportplatte aufgebaut würden. Eine solche Lösung wäre jedoch teurer und weniger flexibel, weil die Transportplatte in der bevorzugten Realisierung einfach ausgetauscht werden kann, ohne den technischen Aufbau des restlichen Containermoduls zu verändern. Wenn die Transportplatte lösbar an dem Containergehäuse befestigt ist, kann das Containermodul sogar einsatzabhängig ausgetauscht werden.

Bei dem neuen Containermodul ist das Containergehäuse auf der Transportplatte in zumindest einer Längsrichtung verschieblich montiert und die fest installierten technischen Geräte bilden einen zumindest weitgehend zusammenhängenden Technikbereich innerhalb des Containergehäuses. Dieser Technikbereich ist gewissermaßen das "Herz" des Containermoduls und bestimmt dessen Funktionsumfang. Die technischen Geräte machen einen erheblichen Anteil am Gesamtgewicht des Containermoduls aus. Dadurch, dass das Containermodul auf der Transportplatte in zumindest einer Längsrichtung verschieblich montiert ist, ist eine einfache Schwerpunktverlagerung möglich, was die Handhabung und den Transport des Containermoduls wesentlich erleichtert. Dies gilt vor allem, wenn das Containermodul Tanks zur Aufnahme von flüssigen Betriebsstoffen beinhaltet, weil sich der Schwerpunkt in diesen Fällen in Abhängigkeit vom Füllgrad der Tanks verlagern kann. Die Möglichkeit der erneuten Schwerpunktverlagerung durch Verschieben des Gehäuses ist besonders vorteilhaft im Hinblick auf die angestrebte Luftverlastbarkeit, jedoch auch beim Heben des Containermoduls am Boden.

Insgesamt ermöglicht die neue Kombination einer separaten lasttragfähigen Transportplatte und eines in sich geschlossenen Containergehäuses mit integrierten, fest installierten Geräten die Realisierung von mobilen Containermodulen, die sich für eine Luftverlastung hervorragend eignet. Durch die fest installierten technischen Geräte ist zudem eine schnelle Entfaltung und Inbetriebnahme des Containermoduls möglich.

In einer besonders bevorzugten Ausgestaltung ist die Transportplatte eine Palette, die dazu ausgebildet ist, lose Ausrüstungsgegenstände und/oder Gepäckstücke in Hubschraubern oder anderen Luftfahrzeugen zu verladen und zu sichern.

Der Vorteil dieser Ausgestaltung besteht darin, dass die Transportplatte bereits eine standardisierte Schnittstelle für die Luftverladung und den Lufttransport bildet. Das neue Containermodul lässt sich daher besonders einfach in bestehende Prozessabläufe beim Lufttransport integrieren, ohne dass zusätzliche Sicherungsmaßnahmen benötigt werden.

In einer weiteren Ausgestaltung weist die Transportplatte an ihrer Oberseite zumindest zwei parallel zueinander verlaufende Führungsschienen auf, an denen der Boden des. Containergehäuses befestigt ist.

Alternativ hierzu könnten solche Führungsschienen auch am Boden des Containergehäuses angeordnet sein oder das Containergehäuse könnte prinzipiell ganz ohne Führungsschienen, beispielsweise mit lokalen Steck- oder Schraubverbindungen, an der Transportplatte befestigt sein. Die Verwendung von Führungsschienen an der Transportplatte stellt demgegenüber eine sehr kostengünstige und flexible Realisierung dar. Das Containergehäuse kann bei der Montage einfach an der Transportplatte befestigt und ausgerichtet werden.

In einer weiteren Ausgestaltung sind an der Unterseite des Bodens Nutensteine angeordnet, die in die Führungsschienen eingreifen.

Alternativ hierzu könnten an der Unterseite des Bodens auch Zangen oder andere Greifmittel angeordnet sein, die die Führungsschienen der Transportplatte von außen umgreifen. Die bevorzugte Ausgestaltung besitzt demgegenüber den Vorteil, dass Hohlräume an den Führungsschienen der Transportplatte leichter gereinigt werden können als Hohlräume auf der Unterseite des Containergehäuses. Die bevorzugte Ausgestaltung erleichtert daher die Montage und eine Veränderung der Längsposition des Containergehäuses auf der Transportplatte.

In einer weiteren Ausgestaltung ist die Transportplatte in zumindest einer Längsrichtung länger als der Boden des Containergehäuses. Vorzugsweise ist die Transportplatte in der Längsrichtung, in der das Containergehäuse auf der Transportplatte verschieblich ist, länger als der Gehäuseboden. Des Weiteren ist es bevorzugt, wenn die Transportplatte in der anderen Längsrichtung in etwa genauso lang ist wie der Gehäuseboden.

Diese Ausgestaltung gewährleistet eine stabile Lagerung des Containergehäuses auf der Transportplatte, selbst wenn das Containergehäuse in der Längsrichtung verschoben wurde. Außerdem ist der Gehäuseboden besser gegen Verschmutzungen im Bereich der Befestigungspunkte geschützt. Solche Verschmutzungen können sich vor allem beim Einsatz des neuen Containermoduls im Gelände ergeben.

In einer weiteren Ausgestaltung besitzt das Containermodul zumindest eine Zwischenwand, die das Containergehäuse in einen ersten und einen separaten zweiten Teilbereich unterteilt, wobei der überwiegende Anteil der technischen Geräte in dem separaten zweiten Teilbereich installiert ist.

In dieser Ausgestaltung besitzt das Containermodul gewissermaßen ein Untergehäuse für den Technikbereich. Die technischen Geräte sind daher besser gegen Einflüsse und Beschädigungen geschützt. Daher trägt diese Ausgestaltung dazu bei, einen robusten Betrieb unter Einsatzbedingungen sicherzustellen.

In einer weiteren Ausgestaltung beinhaltet die zumindest eine Zwischenwand einen vertikalen Wandabschnitt, so dass der erste und der zweite Teilbereich auf der Transportplatte zumindest teilweise nebeneinander angeordnet sind.

In dieser Ausgestaltung ist der separate Technikbereich nur über einem Teil der Gesamtfläche der Transportplatte angeordnet. Dies ist primar facie ungünstig, wenn man eine möglichst zentrale Schwerpunktlage erreichen möchte. Diese Ausgestaltung erleichtert jedoch eine schnelle Entfaltung und Inbetriebnahme des Containermoduls am Einsatzort.

In einer weiteren Ausgestaltung besitzt das Containermodul zumindest zwei Duschwannen, von denen zumindest eine im Transportzustand die Dachabdeckung bildet.

In dieser Ausgestaltung ist das Containermodul vorzugsweise zur Dekontamination von Personen und/oder als Sanitärmodul ausgebildet. Im Gegensatz zu bekannten Containermodulen dieser Art sind die Duschwannen hier jedoch nicht oder zumindest nicht alle am Boden des Containergehäuses angeordnet. Vielmehr bildet zumindest eine der Duschwannen die Dachabdeckung oder zumindest einen Teil davon. Diese Ausgestaltung besitzt den Vorteil, dass eine relativ große Duschfläche zur Verfügung gestellt werden kann, auch wenn die Grundfläche des Containermoduls sehr klein ist. Das Containermodul dieser Ausgestaltung ermöglicht daher einen hohen Personendurchsatz, selbst wenn das Modul nur eine geringe Grundfläche aufweist.

In einer weiteren Ausgestaltung besitzt das Containermodul zumindest einen Lamellenvorhang, mit dem die zumindest zwei Duschwannen wahlweise separierbar sind.

Diese Ausgestaltung ist besonders vorteilhaft, um einerseits mehrere intime Hygienebereiche zur Verfügung zu stellen und andererseits einen großen Duschbereich zu ermöglichen, um beispielsweise verletzte Personen im Liegen abduschen zu können.

In einer weiteren Ausgestaltung beinhaltet das Containermodul ein Zelt, das im Transportzustand in dem ersten Teilbereich untergebracht ist. Vorzugsweise ist das Zelt zumindest teilweise aufblasbar, wobei es sich beim Aufblasen selbständig entfaltet. Des Weiteren ist das Zelt in bevorzugten Ausgestaltungen hinsichtlich seiner Größe und Aufteilung dazu ausgebildet, die Duschwanne und zusätzliche Trocken- und Ankleidebereiche zu umgeben.

Die Kombination von Containern und Anbauzelten wurde auch schon bei Dekontaminations- und Sanitärmodulen nach dem Stand der Technik verwendet. Typischerweise wurde das Zelt jedoch nur als eine Art Vorzelt verwendet, d.h. der eigentliche Duschvorgang fand im Containermodul selbst statt. Im vorliegenden Fall findet der Duschvorgang in dem Zelt statt, was den Vorteil besitzt, dass ein großer und komfortabler Duschbereich auf einer kleinen Transportfläche untergebracht werden kann. Ein aufblasbares Zelt trägt ferner dazu bei, die Aufbauzeiten zur Inbetriebnahme des Containermoduls zu minimieren. Die Unterbringung des Zeltes innerhalb des ersten Teilbereichs besitzt den Vorteil, dass die technischen Geräte gegen Beschädigungen beim Verpacken und Transportieren des Zeltes gut geschützt sind.

In einer weiteren Ausgestaltung besitzt das Containermodul einen (ersten) Wassertank, der weitgehend vollflächig am Boden angeordnet ist.

In bevorzugten Ausführungsbeispielen ist der Tank unter beiden Teilbereichen des Containergehäuses angeordnet. Vorteil dieser Ausgestaltung ist, dass der Schwerpunkt des Containermoduls unabhängig von der Befüllung des Wassertanks weitgehend konstant und relativ niedrig liegt.

In einer weiteren Ausgestaltung besitzt das Containermodul einen (zweiten) faltbaren Wassertank, der lediglich in dem ersten Teilbereich angeordnet ist.

Diese Ausgestaltung ist von Vorteil, wenn der Wassertank zur Aufnahme von sehr großen Mengen an Flüssigkeiten ausgebildet sein soll, beispielsweise wenn das Containermodul u.a. zum Wassertransport eingesetzt werden soll.

In einer weiteren Ausgestaltung besitzt das Containermodul lösbar zusammensteckbare Isolationswände, die dazu ausgebildet sind, einen Innenraum zu bilden, in dem der zweite Wassertank angeordnet ist, sowie eine Luftheizung, die dazu ausgebildet ist, den Innenraum mit Warmluft zu beheizen.

Diese Ausgestaltung ist besonders bevorzugt für ein Containermodul, das u.a. zum Transport von großen Mengen an Wasser eingesetzt werden soll. Mit den zusammensteckbaren Isolationswänden lässt sich thermisch isoliertes Speichervolumen realisieren, das zu Transportzwecken zurückgebaut werden kann. Eine Luftheizung ist in Kombination mit den zusammensteckbaren Isolationswänden eine sehr effiziente Möglichkeit, um zu verhindern, dass das Wasser beim Transport oder der Aufbewahrung gefriert.

In einer weiteren Ausgestaltung beinhalten die technischen Geräte zumindest eines der folgenden Geräte: Heizgerät zum Aufheizen von Frischwasser, Heizgerät zum Aufheizen von Luft, Klimagerät, Generator zur Stromerzeugung und/oder Stromwandlung. Vorzugsweise beinhalten die technischen Geräte außerdem Pumpen, Ventile, Filter, Batterien und/oder einen Kraftstofftank.

Derartige technische Geräte ermöglichen die Durchführung von anspruchsvollen Versorgungs- und Unterstützungsdienstleistungen. Sie stellen jedoch erhebliche Anforderungen im Hinblick auf die gewünschte Luftverlastbarkeit des neuen Containermoduls. Umgekehrt wirken sich die oben beschriebenen Vorteile des neuen Containermoduls besonders vorteilhaft aus, wenn eines oder mehrere der zuvor genannten technischen Geräte in dem Containermodul fest installiert ist.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert. Es zeigen:
- Figur 1: ein mobiles Containersystem mit zwei Containermodulen und einem Transportfahrzeug mit Anhänger gemäß einem bevorzugten Ausfüh- rungsbeispiel der Erfindung,
- Figur 2: das Containersystem gemäß Figur 1 in einem Einsatzzustand,
- Figur 3: das Containersystem aus Figur 2 in einem weiteren Einsatzzustand,
- Figur 4: eine vereinfachte Darstellung eines Containermoduls nach einem Ausführungsbeispiel der Erfindung in einer teilweise geschnittenen An- sicht von oben,
- Figur 5: das Containermodul aus Figur 4 in einer teilweise geschnittenen Seitenansicht,
- Figur 6: einen Detailausschnitt des Containermoduls aus Figur 5, und
- Figur 7: das Containermodul aus Figur 5 in einem bevorzugten Transport- zustand.

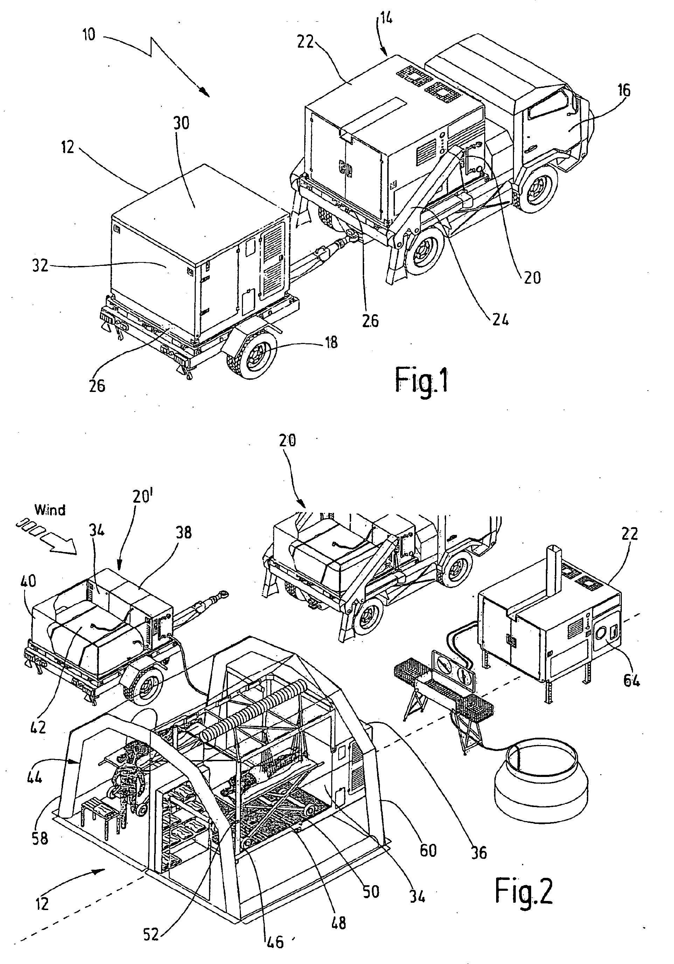

In Figur 1 ist ein Containersystem gemäß einem Ausführungsbeispiel der Erfindung in seiner Gesamtheit mit der Bezugsziffer 10 bezeichnet.

Das Containersystem 10 besitzt hier zwei Containermodule 12, 14, die zusammen ein Dekontaminationssystem zum Dekontaminieren von Personen und persönlichen Ausrüstungsgegenständen bereitstellen. Der Begriff "Dekontaminieren" ist ein Fachterminus, der die gezielte Beseitigung und/oder Unschädlichmachung von radioaktiven, biologischen oder chemischen Substanzen bezeichnet, die ohne derartige Maßnahmen eine Gefahr für die Gesundheit oder sogar das Leben von Personen darstellen. Derartige Substanzen können die Folge von militärischen Anwendungen radioaktiver, biologischer oder chemischer Kampfstoffe sein oder auch die Folge von entsprechenden Terroranschlägen. Darüber hinaus können solche Substanzen auch in Folge von zivilen Unfällen zu einer Kontamination von Personen oder Gegenständen führen, beispielsweise nach einem Unfall in einer chemischen Fabrik oder in einem Kernkraftwerk. Maßnahmen zur Dekontamination beinhalten das Entstrahlen (A-Dekontamination), das Entseuchen (B-Dekontamination) und das Entgiften (C-Dekontamination), wobei abhängig von der Art der Dekontamination unterschiedliche Dekontaminationsmittel und -verfahren zum Einsatz kommen können.

In dem Ausführungsbeispiel gemäß Figur 1 ist das Containermodul 12 ein Modul, das eine autarke Dekontamination von Personen unter Einsatzbedingungen ermöglicht. Das Containermodul 14 ermöglicht eine autarke Dekontamination von persönlichen Ausrüstungsgegenständen. Zusammen bilden die Containermodule 12, 14 ein luftverlastbares Dekontaminationssystem für hochmobile Einsatzkräfte. Die Erfindung ist jedoch nicht allein auf ein solches Ausführungsbeispiel beschränkt. Prinzipiell können die neuen Containermodule auch als Module zur Trinkwasseraufbereitung und/oder Abwasserbehandlung, als Kochmodule, als Sanitärmodule (mit Toiletten und/oder Waschplätzen), als Dekontaminationsmodule für temperaturempfindliches Sondergerät oder als Energieversorgungsmodule für Feldlager ausgebildet sein.

Im Ausführungsbeispiel in Figur 1 ist das Containermodul 14 auf einem Transportfahrzeug 16 angeordnet und das Containermodul 12 ist auf einem Anhänger 18 angeordnet, der von dem Transportfahrzeug 16 gezogen wird. Bei dem Transportfahrzeug 16 handelt es sich in einem bevorzugten Ausführungsbeispiel um ein Fahrzeug des Typs MUNGO 2 der Firma Krauss-Maffei Wegmann.

Das Containermodul 14 besitzt zwei Teilmodule 20, 22. Das Teilmodul 20 dient zum Wassertransport (wird weiter unten näher ausgeführt). Das Teilmodul 22 dient zur Dekontamination von persönlichen Ausrüstungsgegenständen.

Das Transportfahrzeug 16 besitzt hier ein integriertes Hubsystem 24, mit dessen Hilfe die Containermodule 12, 14 auf das Transportfahrzeug 16 und den Anhänger 18 aufgeladen bzw. abgesetzt werden können. Dies geschieht in den bevorzugten Ausführungsbeispielen insbesondere dadurch, dass das Hubsystem 24 die Containermodule 12, 14 an einer Transportplatte 26 aufnimmt, auf der die Containermodule 12, 14 gelagert sind.

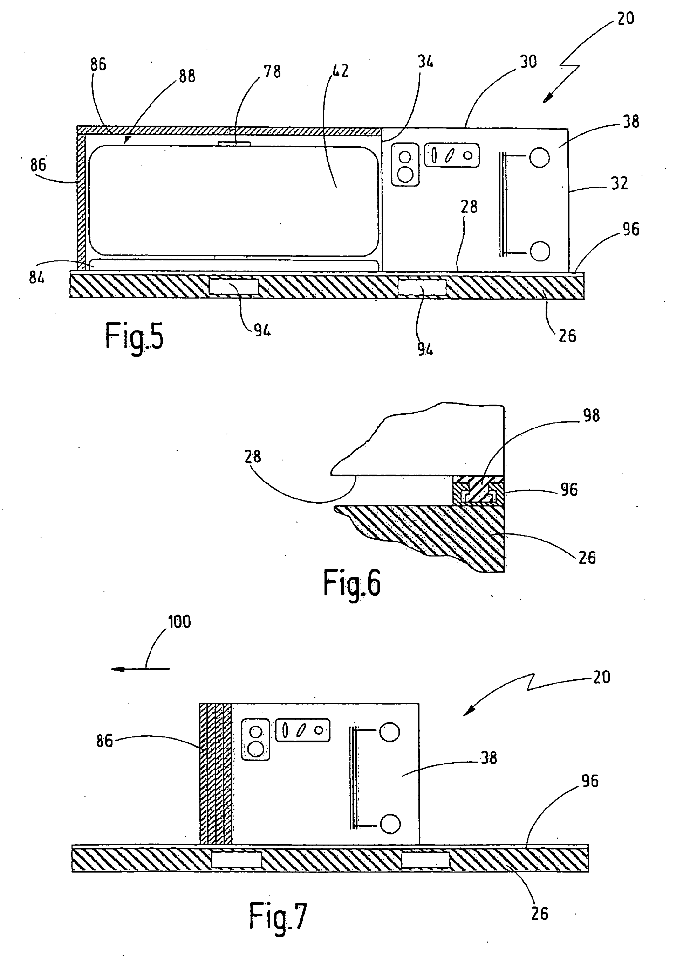

Jedes Containermodul 12, 14 besitzt einen Boden 28 (Figur 6), eine Dachabdeckung 30 und Seitenwände 32, die zusammen ein Containergehäuse bilden. In den bevorzugten Ausführungsbeispielen ist das Containergehäuse quaderförmig und nach weitgehend geschlossen. Innerhalb des Containergehäuses können die Containermodule 12, 14 Zwischenwände 34 aufweisen, die insbesondere dazu dienen, einen Technikbereich 36, 38 von einem weiteren Teilbereich 40 innerhalb des Containermoduls 12, 14 abzugrenzen (Figur 2).

Beispielsweise ist in Figur 2 gezeigt, dass das Teilmodul 20 in dem zweiten Teilbereich 40 einen Falttank 42 aufweist, der zum Wassertransport dient. Aus diesem Grund kann das Teilmodul 20 nach der Entfaltung des Gesamtsystems wahlweise auf dem Anhänger 18 oder dem Transportfahrzeug 16 angeordnet sein, wie dies in Fig. 2 dargestellt ist.

Bei dem Containermodul 12 dient eine Zwischenwand 34 dazu, den Technikbereich 36 von einem Materialbereich abzugrenzen, in dem vor allem ein Zelt 44 und Material für insgesamt drei Duschplätze untergebracht werden kann.

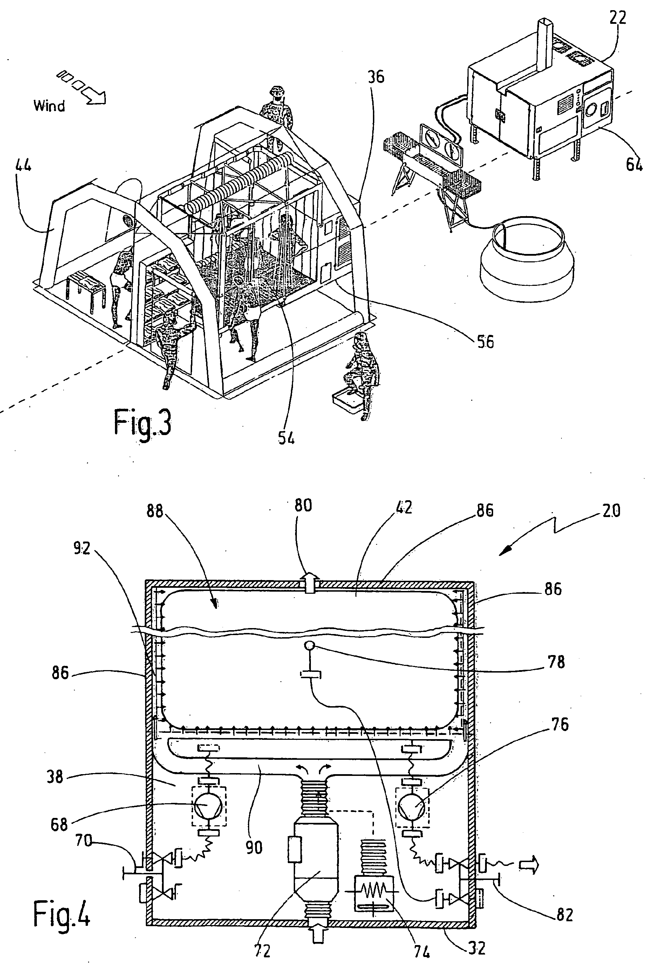

Wie man in Figur 2 erkennen kann, besitzt das Containermodul 12 insgesamt drei Duschwannen 46, 48, 50. Die Duschwannen 46, 48, 50 sind so ausgebildet, dass sie beim Transport des Containermoduls 12 die Dachabdeckung 30 bilden. Sie können zusammengesteckt werden und ragen dann teilweise über die Transportplatte hinaus Des Weiteren beinhaltet das Containermodul 12 einen Tragrahmen, der über den Duschwannen 46, 48, 50 aufgebaut werden kann, um einzelne Duschkabinen sowie einzelne zugeordnete Bereiche zum Abtrocknen auszubilden. An dem Tragrahmen 52 sind Lamellenvorhänge 54 angeordnet (Figur 3), mit denen die einzelnen Duschkabinen voneinander abgetrennt werden können. Wie in Figur 2 dargestellt ist, können die Lamellenvorhänge hochgezogen und/oder ausgehängt werden, um einen zusammenhängenden großen Duschbereich zu bilden, der insbesondere zum Abduschen von liegenden, verletzten Personen genutzt werden kann.

Um einen autarken Betrieb zu ermöglichen, besitzt das Containermodul 12 einen integrierten Wassertank 56, der am Boden des Containermoduls 12 angeordnet ist und sich nahezu über die gesamte Grundfläche des Containermoduls 12 erstreckt.

Im Technikbereich 36 sind alle wesentlichen technischen Geräte untergebracht, die zum Duschen von Personen unter Feldbedingungen erforderlich sind. Hierzu gehören ein thermoelektrisches Energiemodul mit einem Generator zur Strornerzeugung, eine Pumpe und eine Heizung zum Aufheizen des Duschwassers, eine Raumheizung zum Aufheizen von Luft, die in das Feld 44 geblasen wird, sowie ein Klimagerät, um ggf. auch Kühlluft in das Zelt 44 zu blasen. In einem bevorzugten Ausführungsbeispiel besitzt der Wassertank 56 eine Kapazität von 500 Litern und die Fördermenge der Pumpe beträgt 15 Liter pro Minute.

Das Zelt 44 besitzt in dem bevorzugten Ausführungsbeispiel zwei Rundbögen 58, 60, die jeweils mit einem Gebläse aus dem Technikbereich 36 aufgeblasen werden können, um das Zelt zu entfalten.

Das Teilmodul 22 beinhaltet eine Kammer 64 zur Dekontamination von Gegenständen der persönlichen Ausrüstung mit Hilfe von Heißgas und/oder Heißdampf. Die Wände der Kammer 64 können zumindest teilweise abgenommen werden, um die Kammer 64 kleinbauend in dem Teilmodul 22 zu verstauen. Ein Brenner zur Erzeugung des Heißgases und/oder Heißdampfes sowie ein Gebläse zum Umwälzen des Gas-/Dampf-Gemisches sind in dem Teilmodul 22 in an sich bekannter Weise untergebracht.

Besonders vorteilhaft ist, dass das Teilmodul 22 im Transportzustand auf das Teilmodul 20 aufgesetzt werden kann, wenn der Falttank 42 leer und zusammengefaltet ist. Das Teilmodul 22 umgreift dann den Technikbereich 38 des Teilmoduls 20, wie dies in Figur 1 dargestellt ist.

In Figur 4 ist das Teilmodul 20 zum Wassertransport in einer teilweise geschnittenen Draufsicht von oben dargestellt. Gleiche Bezugszeichen bezeichnen dieselben Elemente wie zuvor.

In dem Technikbereich 38 des Teilmoduls 20 sind u.a. eine Abwasserpumpe 68, ein Kombiventil 70 für das Abwasser und Entlüftung, ein Luftheizgerät 72, ein Elektroheizgerät 74 und eine Frischwasserpumpe 76 angeordnet. Die Frischwasserpumpe 76 ist mit dem Tank 42 verbunden und dazu ausgebildet, Frischwasser aus dem Tank 42 über das Kombiventil 82 nach außen zu pumpen. Das Kombiventil 82 ist dazu ausgebildet, den Frischwasserabfluss und eine Entlüftungsöffnung jeweils gleichzeitig zu öffnen und zu verschließen.

Unterhalb des Tanks 42 ist ein zweiter, separater Falttank 84 angeordnet (Figur 5), der als Abwassertank dient. Der Falttank 84 ist mit der Abwasserpumpe 68 und dem

Kombiventil 70 verbunden. Die beiden Tanks 42, 84 können zeitgleich verwendet werden, um das Abwasser vom Duschen aufzufangen, wenn dies gewünscht ist.

In dem bevorzugten Ausführungsbeispiel besitzt das Teilmodul 20 lösbar zusammensteckbare Isolationswände 86, die einen Innenraum 88 ausbilden, in dem die beiden Tanks 42, 84 angeordnet sind. Des Weiteren sind in dem Teilmodul 20 Luftkanäle 90 mit Auslassöffnungen integriert, mit deren Hilfe Warmluft in den Innenraum 88 gepumpt werden kann. Damit kann man verhindern, dass das Wasser in den Falttanks 42, 84 gefriert. Der Warmluftstrom ist in Figur 4 bei der Bezugsziffer 92 angedeutet.

Die Figuren 5 und 6 zeigen, wie das Teilmodul 20 auf der Transportplatte 26 befestigt ist. Die Transportplatte 26 besitzt seitliche Einstecktaschen 94, die so ausgebildet sind, dass die Transportplatte 26 mit einem Gabelstapler oder einem ähnlichen Hebewerkzeug hochgehoben werden kann. An der Oberseite der Transportplatte 26 sind Führungsschienen 96 befestigt, die im Querschnitt ein C-förmiges Hohlprofil aufweisen (Figur 6). Am Boden 28 des Containermoduls 20 sind Nutensteine bzw. Füße 98 angeordnet, die in das Hohlprofil der Führungsschienen 96 eingreifen. Die Nutensteine 98 können mit Schrauben (hier nicht dargestellt) oder mit Hilfe eines Klemmmechanismus (nicht dargestellt) in einer gewünschten Verschiebeposition fixiert werden.

Figur 7 zeigt das Teilmodul 20, wobei der Technikbereich 38 auf den Führungsschienen 96 in Richtung des Pfeils 100 verschoben wurde, um den Schwerpunkt des Moduls 20 weitgehend mittig über die Transportplatte 26 zu legen. Diese Verschiebeposition ist besonders vorteilhaft, wenn die Falttanks 42, 84 leer und zusammengefaltet sind. Die Isolationswände 86 lassen sich vorteilhafterweise an der Zwischenwand 34 des Technikbereichs 38 befestigen.

Das Teilmodul 20 kann prinzipiell auch aus den Führungsschienen 96 herausgeschoben werden, um beispielsweise die Transportplatte 26 auszutauschen.

Des Weiteren ist aus den Figuren 5 und 7 erkennbar, dass die Transportplatte 26 in Richtung der Führungsschienen 96 länger ist als das darauf angeordnete Containergehäuse, um das Verschieben des Containergehäuses zu erleichtern. Grundsätzlich könnte das Containergehäuses jedoch auch über die Transportplatte 26 herausragen.

Das neue Containermodul ist in Bezug auf seine äußeren Abmessungen und sein Gesamtgewicht so ausgebildet, dass es die Grenzen für einen Lufttransport in einem Hubschrauber des Typs CH53 einhält. In bevorzugten Ausführungsbeispielen besitzt das Containermodul eine Grundfläche von etwa 2 m x 1,8 m und eine Höhe von etwa 1,5 m und das Gesamtgewicht des Containermoduls liegt bei maximal 1.800 kg.

## Patentansprüche

1. Mobiles Containermodul für militärische und/oder humanitäre Feldeinsätze, insbesondere für die Dekontamination von Personen oder persönlichen Ausrüstungsgegenständen unter Feldbedingungen, mit einem Boden (28), einer Dachabdeckung (30) und Seitenwänden (32), die zumindest im Transportzustand ein weitgehend geschlossenes, vorzugsweise quaderförmiges Containergehäuse bilden, mit einer Anzahl von technischen Geräten (68, 70, 72, 74, 76), die den Funktionsumfang des Containermoduls bestimmen, wobei ein überwiegender Anteil der technischen Geräte (68, 70, 72, 74, 76) in einem räumlich zusammenhängenden Teilbereich (36, 38) des Containergehäuses fest installiert ist, und mit einer lasttragfähigen Transportplatte (26), auf der das Containergehäuse dauerhaft befestigt ist, **dadurch gekennzeichnet, dass** das Containergehäuse auf der Transportplatte (26) in zumindest einer Längsrichtung (100) verschieblich montiert ist.

2. Mobiles Containermodul nach Anspruch 1, **dadurch gekennzeichnet, dass** die Transportplatte eine Palette ist, die dazu ausgebildet ist, lose Ausrüstungsgegenstände in Hubschraubern oder anderen Luftfahrzeugen zu verladen und zu sichern.

3. Mobiles Containermodul nach Anspruch 1 oder 2, **dadurch gekennzeichnet, dass** die Transportplatte (26) an ihrer Oberseite zumindest zwei parallel zueinander verlaufende Führungsschienen (96) aufweist, an denen der Boden (28) befestigt ist.

4. Mobiles Containermodul nach Anspruch 3, **dadurch gekennzeichnet, dass** an der Unterseite des Bodens (28) Nutensteine (98) angeordnet sind, die in die Führungsschienen (96) eingreifen.

5. Mobiles Containermodul nach einem der Ansprüche 1 bis 4, **dadurch gekennzeichnet, dass** die Transportplatte (26) in zumindest einer Längsrichtung länger ist als der Boden (28).

6. Mobiles Containermodul nach einem der Ansprüche 1 bis 5, **gekennzeichnet durch** zumindest eine Zwischenwand (34), die das Containergehäuse in einen ersten Teilbereich (40, 88) und einen separaten zweiten Teilbereich (36, 38) unterteilt, wobei der überwiegende Anteil der technischen Geräte (68, 70, 72, 74, 76) in dem separaten zweiten Teilbereich (36, 38) installiert ist.

7. Mobiles Containermodul nach Anspruch 6, **dadurch gekennzeichnet, dass** die zumindest eine Zwischenwand (34) einen vertikalen Wandabschnitt beinhaltet, so dass der erste und der zweite Teilbereich (88; 38) auf der Transportplatte (26) zumindest teilweise nebeneinander angeordnet sind.

8. Mobiles Containermodul nach Anspruch 6 oder 7, **gekennzeichnet durch** zumindest zwei Duschwannen (46, 48, 50), von denen zumindest eine im Transportzustand die Dachabdeckung (30) bildet.

9. Mobiles Containermodul nach Anspruch 8, **gekennzeichnet durch** zumindest einen Lamellenvorhang (54), mit dem die zumindest zwei Duschwannen (46, 48, 50) wahlweise separierbar sind.

10. Mobiles Containermodul nach einem der Ansprüche 6 bis 9, **gekennzeichnet durch** ein Zelt (44), das im Transportzustand in dem ersten Teilbereich (40) untergebracht ist.

11. Mobiles Containermodul nach einem der Ansprüche 6 bis 10, **gekennzeichnet durch** einen ersten Wassertank (56), der weitgehend vollflächig am Boden (28) angeordnet ist.

12. Mobiles Containermodul nach einem der Ansprüche 6 bis 11, **gekennzeichnet durch** zumindest einen zweiten, faltbaren Wassertank (42, 84), der in dem ersten Teilbereich (88) angeordnet ist.

13. Mobiles Containermodul nach Anspruch 12, **gekennzeichnet durch** lösbar zusammensteckbare Isolationswände (86), die dazu ausgebildet sind, einen Innenraum (88) zu bilden, in dem der zweite Wassertank (42, 84) angeordnet ist, sowie eine Luftheizung (72), die dazu ausgebildet ist, den Innenraum (88) mit Warmluft (92) zu beheizen.

14. Mobiles Containermodul nach einem der Ansprüche 1 bis 13, **dadurch gekennzeichnet, dass** die technischen Geräte zumindest eines der folgenden Geräte beinhalten: Heizgerät zum Aufheizen von Frischwasser (74), Heizgerät zum Aufheizen von Luft (72), Klimagerät, Generator zur Stromerzeugung und/oder Stromwandlung.

15. Mobiles Containersystem für militärische und/oder humanitäre Feldeinsätze, insbesondere für die Dekontamination von Personen und persönlichen Ausrüstungsgegenständen unter Feldbedingungen, mit einem ersten und einem zweiten Containermodul (12, 14), wobei jedes Containermodul einen Boden (28), eine Dachabdeckung (30) und Seitenwände (32) aufweist, die zumindest im Transportzustand ein weitgehend geschlossenes, vorzugsweise quaderförmiges Containergehäuse bilden, und wobei jedes Containermodul eine Anzahl von technischen Geräten (68, 70, 72, 74, 76) aufweist, die seinen Funktionsumfang bestimmen, wobei jeweils ein überwiegender Anteil der technischen Geräte (68, 70, 72, 74, 76) in einem räumlich zusammenhängenden Teilbereich (36, 38) des Containergehäuses fest installiert ist, und wobei jedes Containermodul (12, 14) eine lasttragfähige Transportplatte (26) aufweist, auf der das Containergehäuse dauerhaft befestigt ist, **dadurch gekennzeichnet, dass** jedes Containermodul (12, 14) auf der jeweiligen Transportplatte (26) in zumindest einer Längsrichtung (100) verschieblich montiert ist.

## Claims

1. A mobile container module for military and/or humanitarian field operations, in particular for decontamination of people or items of personal equipment in field conditions, comprising a floor (28), a roof cover (30) and side walls (32) which, at least in the transport state, form a substantially closed, preferably cuboid container housing, comprising a number of technical devices (68, 70, 72, 74, 76) which determine the functional scope of the container module, wherein the majority of the technical devices (68, 70, 72, 74, 76) is permanently installed in a spatially cohesive subarea (36, 38) of the container housing, and comprising a load-bearing transport plate (26) on which the container housing is permanently mounted, **characterized in that** the container housing is mounted on the transport plate (26) such that it can be moved in at least one longitudinal direction (100).

2. The mobile container module of claim 1, **characterized in that** the transport plate is a pallet designed to load loose items of equipment into helicopters or other aircraft and to secure them.

3. The mobile container module of claim 1 or 2, **characterized in that** the transport plate (26), on its upper face, has at least two guide rails (96) running parallel to one another, the floor (28) being attached to the guide rails.

4. The mobile container module of claim 3, **characterized in that** sliding blocks (98) are arranged on the lower face of the floor (28) and engage in the guide rails (96).

5. The mobile container module of one of claims 1 to 4, **characterized in that** the transport plate (26) is longer than the floor (28) in at least one longitudinal direction.

6. The mobile container module of one of claims 1 to 5, **characterized by** at least one intermediate wall (34), which subdivides the container housing into a first subarea (40, 88) and a separate second subarea (36, 38), with the majority of the technical devices (68, 70, 72, 74, 76) being installed in the separate second subarea (36, 38).

7. The mobile container module of claim 6, **characterized in that** the at least one intermediate wall (34) includes a vertical wall section, such that the first and the second subarea (88; 38) are arranged at least partially alongside one another on the transport plate (26).

8. The mobile container module according to claim 6 or 7, **characterized by** at least two shower trays (46, 48, 50), at least one of which forms the roof cover (30) in the transport state.

9. The mobile container module of claim 8, **characterized by** at least one lamellar curtain (54), by means of which the at least two shower trays (46, 48, 50) can be selectively separated.

10. The mobile container module of one of claims 6 to 9, **characterized by** a tent (44) which, in the transport state, is accommodated in the first subarea (40).

11. The mobile container module of one of claims 6 to 10, **characterized by** a first water tank (56) which is arranged largely over the entire area on the floor (28).

12. The mobile container module of one of claims 6 to 11, **characterized by** at least one second, foldable water tank (42, 84), which is arranged in the first subarea (88).

13. The mobile container module of claim 12, **characterized by** insulation walls (86) configured to be detachably plugged together in order to form an internal area (88) in which the second water tank (42, 84) is arranged, and comprising an air heater (72) designed to heat the internal area (88) with warm air (92).

14. The mobile container module of one of claims 1 to 13, **characterized in that** the technical devices comprise at least one of the following devices: heater for heating fresh water (74), heater for heating air (72), air-conditioning unit, generator for electricity generation and/or electrical power conversion.

15. A mobile container system for military and/or humanitarian field operations, in particular for decontamination of people and items of personal equipment in field conditions, comprising a first and a second container module (12, 14), with each container module having a floor (28), a roof cover (30) and side walls (32), which, at least in the transport state, form a substantially closed, preferably cuboid container housing, with each container module having a number of technical devices (68, 70, 72, 74, 76) which determine its functional scope, with the majority of the technical devices (68, 70, 72, 74, 76) being permanently installed in a spatially cohesive subarea (36, 38) of the container housing, and with each container module (12, 14) having a load-bearing transport plate (26) on which the container housing is permanently mounted, **characterized in that** each container module (12, 14) is mounted on the respective transport plate (26) in such a manner that it can be moved in at least one longitudinal direction (100).

## Revendications

1. Module conteneur mobile pour utilisations en campagne militaire et/ou humanitaire, notamment pour la décontamination de personnes ou d'équipement de personnel dans des conditions de campagne, avec un plancher (28), un recouvrement de toiture (30) et des parois latérales (32), qui forment au moins dans l'état de transport une enceinte de conteneur essentiellement fermée, de préférence de forme parallélépipédique, avec un certain nombres d'appareils techniques (68, 70, 72, 74, 76), qui définissent le cadre fonctionnel du module conteneur, une proportion majeure des appareils techniques (68, 70, 72, 74, 76) étant installée fixement dans une région partielle (36, 38) contiguë de l'enceinte de conteneur, et avec une plaque de transport (26) en mesure supporter des charges, sur laquelle est fixée l'enceinte de conteneur, de manière durable, **caractérisé en ce que** l'enceinte de conteneur est montée de manière déplaçable sur la plaque de transport (26) dans au moins une direction longitudinale (100).

2. Module conteneur mobile selon la revendication 1, **caractérisé en ce que** la plaque de transport est une palette, qui est réalisée de manière à charger des équipements individuels dans des hélicoptères ou d'autres aéronefs et à les y fixer.

3. Module conteneur mobile selon la revendication 1 ou 2, **caractérisé en ce que** la plaque de transport (26) présente sur son côté supérieur au moins deux rails de guidage (96) s'étendant parallèlement l'un à l'autre, sur lesquels est fixé le plancher (28).

4. Module conteneur mobile selon la revendication 3, **caractérisé en ce que** des coulisseaux (98) sont disposés sur le côté inférieur du plancher (28), lesquels viennent en prise dans les rails de guidage (96).

5. Module conteneur mobile selon l'une quelconque des revendications 1 à 4, **caractérisé en ce que** la plaque de transport (26) est plus longue que le plancher (28) dans au moins une direction longitudinale.

6. Module conteneur mobile selon l'une quelconque des revendications 1 à 5, **caractérisé par** au moins une paroi intermédiaire (34) qui divise l'enceinte de conteneur dans une première région partielle (40, 88) et une deuxième région partielle séparée (36, 38), la proportion majeure des appareils techniques (68, 70, 72, 74, 76) étant installée dans la deuxième région partielle séparée (36, 38).

7. Module conteneur mobile selon la revendication 6, **caractérisé en ce que** l'au moins une paroi intermédiaire (34) contient une portion de paroi verticale de sorte que la première et la deuxième région partielle (88 ; 38) sur la plaque de transport (26) soient disposées au moins en partie l'une à côté de l'autre.

8. Module conteneur mobile selon la revendication 6 ou 7, **caractérisé par** au moins deux bacs de douche (46, 48, 50) dont au moins un forme dans l'état de transport le recouvrement de toiture (30).

9. Module conteneur mobile selon la revendication 8, **caractérisé par** au moins un rideau à lamelles (54), qui permet de séparer les au moins deux bacs de douche (46, 48, 50) de manière sélective.

10. Module conteneur mobile selon l'une quelconque des revendications 6 à 9, **caractérisé par** une tente (44) qui est montée dans la première région partielle (40) dans l'état de transport.

11. Module conteneur mobile selon l'une quelconque des revendications 6 à 10, **caractérisé par** un premier réservoir d'eau (56), qui est disposé sensiblement sur toute la surface du plancher (28).

12. Module conteneur mobile selon l'une quelconque des revendications 6 à 11, **caractérisé par** au moins un deuxième réservoir d'eau pliable (42, 84) qui est disposé dans la première région partielle (88).

13. Module conteneur mobile selon la revendication 12, **caractérisé par** des parois d'isolation (86) pouvant être imbriquées l'une dans l'autre de manière amovible, qui sont réalisées de manière à former un espace interne (88) dans lequel est disposé le deuxième réservoir d'eau (42, 84), ainsi qu'un chauffage d'air (72) qui est réalisé de manière à chauffer l'espace interne (88) avec de l'air chaud (92).

14. Module conteneur mobile selon l'une quelconque des revendications 1 à 13, **caractérisé en ce que** les appareils techniques incluent au moins l'un des appareils suivants : un appareil de chauffage pour chauffer de l'eau fraîche (74), un appareil de chauffage pour chauffer l'air (72), un appareil de climatisation, un générateur pour produire de l'électricité et/ou pour convertir le courant.

15. Système de conteneur mobile pour utilisations en campagne militaire et/ou humanitaire, notamment pour la décontamination de personnes ou d'équipement de personnel dans des conditions de campagne, avec un premier et un deuxième module conteneur (12, 14), chaque module conteneur présentant un plancher (28), un recouvrement de toiture (30) et des parois latérales (32), qui forment au moins dans l'état de transport une enceinte de conteneur essentiellement fermée, et chaque module conteneur présentant un certain nombre d'appareils techniques (68, 70, 72, 74, 76), qui définissent son cadre fonctionnel, une proportion majeure des appareils techniques (68, 70, 72, 74, 76) étant à chaque fois installée fixement dans une région partielle (36, 38) contiguë de l'enceinte de conteneur, et chaque module conteneur (12, 14) présentant une plaque de transport (26) en mesure supporter des charges, sur laquelle est fixée l'enceinte de conteneur, de manière durable, **caractérisé en ce que** chaque module conteneur (12, 14) est monté de manière déplaçable sur la plaque de transport respective (26) dans au moins une direction longitudinale (100).
